Europäisches Patentamt

European Patent Office

Office européen des brevets

(19)

(11) Veröffentlichungsnummer: **0 362 692**
**A2**

## (12) EUROPÄISCHE PATENTANMELDUNG

(21) Anmeldenummer: 89117945.9

(51) Int. Cl.5: **G02C 7/02**

(22) Anmeldetag: 28.09.89

(30) Priorität: 06.10.88 DE 3834077

(43) Veröffentlichungstag der Anmeldung:
**11.04.90 Patentblatt 90/15**

(84) Benannte Vertragsstaaten:
**AT BE CH DE ES FR GB GR IT LI LU NL SE**

(71) Anmelder: **Kellner, Helmut, Prof. Dr.**
**Auf der Kave 50**
**D-2956 Moormerland(DE)**

(72) Erfinder: **Kellner, Helmut, Prof. Dr.**
**Auf der Kave 50**
**D-2956 Moormerland(DE)**

(74) Vertreter: **Zeitler, Giselher, Dipl.-Ing.**
**Patentanwalt Herrnstrasse 15 Postfach 26 02**
**51**
**D-8000 München 26(DE)**

(54) Brille zum ermüdungsfreien Betrachten der Bildebene eines Bildschirms oder anderer Bildebenen.

(57) Bei einer Brille zum ermüdungsfreien Betrachten der Bildebene 8 eines Bildschirms 9 oder anderer Bildebenen sind zwei im Augabstand voneinander angeordnete, durch ein Traggestell 5 gehaltene und starr miteinander verbundene optische Gläser 2,3;13 vorgesehen. Diese sind jeweils so ausgebildet, daß die von der Bildebene 8 kommenden divergenten Lichtstrahlen 11 auf der augseitigen Glasoberfläche als angenähert parallele Lichtstrahlen 10 austreten und vollständig oder angenähert konvergenzfrei, d.h. im erwünschten Ausmaß konvergenzkompensiert, ins Auge 4 fallen und/oder das die Entfernung der Bild-ebene 8 zum Auge 4 bzw. zum optischen Glas der angenähert akkomodationsfreien Ferneinstellung des Auges 4 entspricht.

## Fig.3

EP 0 362 692 A2

Xerox Copy Centre

## Brille zum ermüdungsfreien Betrachten der Bildebene eines Bildschirms oder anderer Bildebenen

Die Erfindung betrifft eine Brille zum ermüdungsfreien Betrachten der Bildebene eines Bildschirms oder anderer Bildebenen gemäß dem Oberbegriff des Anspruchs 1.

Beim üblichen Betrachten eines ebenen Objektes, insbesondere eines ein Bild erzeugenden Bildschirms, mit dem gesunden unbewaffneten Auge, d.h. also ohne Brille, treten die bekannten optischen Effekte auf, nämlich dahingehend, daß die anatomische bzw. optische Augenachse auf die Konvergenz der vom Bildschirm kommenden Lichtstrahlen eingestellt sein muß und daß außerdem das Auge die erforderliche Akkommodation, d.h. die Scharfeinstellung auf die jeweilige Entfernung des zu erblickenden bzw. auf der Netzhaut abzubildenden Bildes durchgeführt hat. Diese Akkommodation erfolgt bekanntermaßen durch einen die Augenlinse umgebenden Ringmuskel, der die Linsenwölbung und damit die Brechzahl der Augenlinse ändert, und zwar derart, daß im Kontraktionszustand des Ringmuskels die Augenlinse zum Zweck der Naheinstellung abgerundet ist, während im Entspannungszustand des Muskels, d.h. also bei erweitertem Muskel, die Augenlinse zum Zweck der Ferneinstellung des Auges flachgezogen ist.

Wenn dann das den Bildschirm betrachtende Auge einmal die erforderliche Konvergenzeinstellung der Blickrichtungen sowie die Akkommodation durchgeführt hat, bleiben diese Einstellungen üblicherweise konstant, da die Sitzposition zum Objekt bzw. zu dem auf dem Bildschirm abgebildeten Bild nicht verändert wird.

Bei einer derartigen Arbeitsposition zeigt sich jedoch der als außerordentlich unangenehm empfundene Nachteil, daß bei den Augen Ermüdungserscheinungen auftreten, da diese aufgrund der ständigen Anspannung des die Akkommodation bewirkenden Ringmuskels sowie aufgrund der erforderlichen Konvergenzeinstellung der Augenachsen überanstrengt werden. Dies gilt insbesondere dann, wenn ein Bildschirm zu Arbeitszwecken über längere Zeit hinweg betrachtet werden muß.

Außerdem tritt beim Betrachten eines Bildschirms, insbesondere eines Farbbildschirmes, bei dem unterschiedliche Farben zur Ausgestaltung des gezeigten Bildes erzeugt werden, zusätzlich zu den vorerwähnten Nachteilen der schnellen Ermüdung und Überanstrengung der Augen ein weiterer wesentlicher Nachteil auf. Dieser besteht darin, daß kein natürliches stereoskopisches bzw. räumliches Sehen des erzeugten Bildes, insbesondere Farbbildes möglich ist, sondern daß dieses normalerweise flach bzw. eben erblickt wird. Dies ist jedoch beispielsweise bei dem heutzutage bereits weitverbreiteten Konstruieren mittels eines an einen Computer angeschlossenen Bildschirms als gravierender Nachteil anzusehen.

Wie bekannt, erfolgt das natürliche räumliche Sehen mittels der Augen dadurch, daß ein Oberflächenpunkt eines räumlichen Objektes von beiden Augen erfaßt wird. Dies erfolgt dadurch, daß die beiden Augenachsen, die ja im Auge ungefähr in die sog. Sehgrube (Fovea centralis), der Stelle der größten Sehschärfe, münden, sich im vorgenannten Oberflächenpunkt schneiden, so daß die erforderliche Konvergenz der Lichtstrahlen eingestellt ist. Außerdem wird im Hinblick auf die jeweilige Entfernung zwischen Auge und Objekt die betreffende Abbildung durch entsprechende Änderung der Augenlinsenkrümmung scharf eingestellt, so daß die erforderliche Akkommodation durchgeführt ist. Die beiden Vorgänge, d.h. sowohl die Konvergenzeinstellung als auch die Akkommodation des Auges, werden automatisch miteinander verbunden, da es sich hierbei um eine empirisch erarbeitete Fähigkeit handelt. Andere naheliegende Oberflächenpunkte werden gleichzeitig auf unterschiedlichen Netzhautstellen abgebildet. Wenn sich diese Oberflächenpunkte in einer anderen Entfernung befinden, entstehen sog. Horizontalparallaxen. Dies entspricht dem bekannten Effekt der Horizontal- bzw. Querdisparation, die Voraussetzung für die räumliche Wahrnehmung ist und somit insgesamt für die Tiefenwahrnehmung des Auges von Bedeutung ist. Hierbei ergibt sich, wie schon dargelegt, eine horizontale Abweichung der Lage beider Netzhautbilder bei entsprechend eingestellter Konvergenz der Augenachsen, wobei jedoch aufgrund einer sog. Erfahrungskorrektur normalerweise statt zweier, nicht deckungsgleicher Bilder nur ein einziges Bild, allerdings in räumlicher Form, wahrgenommen wird.

Das oben geschilderte natürliche räumliche Sehen kann auch künstlich erzeugt werden. Zu diesem Zweck sind die Augen durch Bildempfangssysteme, wie Photoapparate, Fernsehkameras usw. ersetzt. Wenn dann bei einer derartigen Anordnung die Bilder den Augen entsprechend zugeordnet werden, d.h. wenn das linke Bild dem linken Auge und das rechte Bild dem rechte Auge zugeordnet wird, entsteht für den Betrachter ein künstlich erzeugter räumlicher Eindruck, das sog. "virtuelle Modell". Durch geeignete Wahl von Aufnahmebrennweite, Aufnahmebasis, d.h. Entfernung der Aufnahmeobjektive, und der Vergrößerung bei der Betrachtung können unterschiedliche räumliche Effekte erzeugt werden.

Um nun auf einem Bildschirm die erzeugten Bilder räumlich darzustellen bzw. räumlich wahrnehmen zu können, sind schon unterschiedliche Verfahren bekannt. Diese weisen jedoch gravierende Nachteile auf, die nachstehend kurz erläutert werden sollen.

So wird bei dem bekannten Anaglyphen-Verfahren das linke Bild eines projizierten Bildes z.B. in grüner Farbe, jedoch das rechte Bild in roter Farbe gezeigt. Wenn dann die beiden gleichzeitig projizierten Bilder mit einer den Farben entsprechenden Rot-Grün-Brille betrachtet werden, wird bei der Betrachtung durch die rote Brille das rote Bild ausgelöscht und das grüne Bild schwarz gesehen - und umgekehrt. Dieser als Farbensubtraktion zu bezeichnende Vorgang weist den Nachteil auf, daß insgesamt nur Schwarz-Weiß-Bilder erzeugt werden können.

Bei dem bekannten Polarisations-Verfahren sind zur grundsätzlichen Funktionsgewährleistung zwei Bildschirme erforderlich, die vorzugsweise rechtwinklig zueinander aufgestellt sind. Vor diesen Bildschirmen sind Polarisationsfilter mit zueinander rechtwinkligen Polarisationsrichtungen angeordnet. Beide Bildschirme werden über einen halbdurchlässigen Spiegel gleichzeitig betrachtet. Hierbei trägt der Betrachter eine Brille, die mit Polarisationsfiltern ausgerüstet ist. Deren Polarisationsrichtungen müssen denen der vor den Bildschirmen angeordneten Polarisationsfilter entsprechen. Dadurch wird erreicht, daß jedes Auge nur jeweils einen Bildschirminhalt sieht. Wie leicht ersichtlich, ist dieses Verfahren jedoch technisch aufwendig und damit sehr teuer.

Schließlich ist auch noch das Zeitmultiplex-Verfahren bekannt. Ausgehend davon, daß derzeit in normalen Fernsehapparaten nach dem Zeilensprungverfahren 50 Halbbilder/sec erzeugt werden, wird hierbei dem ersten Halbbild das linke Bild und dem zweiten Halbbild das rechte Bild zugeordnet. Wenn dann vor den Augen Blenden angebracht sind, die in der vorgenannten Bildfolge die Sicht für die einzelnen Augen freigeben, so entsteht ein virtuelles Bildmodell. Auch dieses Verfahren ist jedoch technisch aufwendig und somit, weil sehr teuer, nachteilig.

Sämtliche der vorerwähnten drei bekannten Verfahren weisen außerdem den gemeinsamen Nachteil auf, daß die Augenbasis während der Betrachtung des künstlich erzeugten räumlichen Bildes immer parallel zur Bildbasis gehalten werden muß. Dies bedeutet, daß selbst schon kleinste Querneigungen Vertikalparallaxen erzeugen, so daß der erzeugte räumliche Eindruck zerfällt, d.h. zunichte gemacht wird.

Der Erfindung liegt daher die Aufgabe zugrunde, zur Beseitigung der geschilderten Nachteile eine Brille zu schaffen, mittels der eine Bildebene, insbesondere diejenige eines Bildschirms vollständig ermüdungsfrei für das Auge betrachtet werden kann, und zwar auch über längere Zeiträume hinweg. Gleichzeitig soll es mit einer solchen Brille ermöglicht werden, die insbesondere auf einem Bildschirm erzeugten Bilder räumlich darstellen bzw. stereoskopisch sehen zu können, und zwar ohne auftretende Vertikalparallaxen.

Die zur Lösung dieser Aufgabe geschaffene Brille gemäß der Erfindung weist die Merkmale des Anspruchs 1 auf. Vorteilhafte Ausgestaltungen hiervon sind in den weiteren Ansprüchen beschrieben.

Der Erfindung liegt der wesentliche Gedanke zugrunde, die Brille derart auszugestalten, daß das auf einem Bildschirm oder an einer anderen Stelle erzeugte Bild bzw. die hiervon ausgehenden Lichtstrahlen durch die Brille entsprechend umgewandelt wird, und zwar derart, daß sich die Augen im sog. Ruhezustand befinden. Dieser Ruhezustand ist, wie eingangs schon dargelegt, dann erreicht, wenn der Blick auf ferne Gegenstände, die weiter als 200 m entfernt sind, gerichtet ist. In diesem Zustand verlaufen die Blickrichtungen angenähert parallel, und die Augenlinse befindet sich - bei gleichzeitig entspanntem Augenringmuskel - in entspannter Stellung. Damit kann in vorteilhafter Weise ohne jegliche Anstrengung oder Überanstrengung der Augen am Bildschirm gearbeitet werden, und zwar über außerordentlich lange Zeiträume hinweg.

Im einzelnen weist die zum ermüdungsfreien Betrachten einer Bildebene dienende Brille gemäß der Erfindung zwei im Augabstand voneinander angeordnete, durch ein Traggestell gehaltene und starr miteinander verbundene optische Gläser oder dgl. Linseneinrichtungen auf. Diese sind jeweils so ausgebildet, daß die von der Bildebene kommenden divergenten Lichtstrahlen auf der augseitigen Glasoberfläche als angenähert parallele Lichtstrahlen austreten und angenähert konvergenzfrei, d.h. im erwünschten Ausmaß konvergenzkompensiert, ins Auge fallen und/oder daß die Entfernung der Bildebene zum Auge bzw. zum optischen Glas der angenähert akkommodationsfreien Ferneinstellung des Auges entspricht.

Aufgrund physiologischer und zum Teil psychologischer Erfahrungswerte hat es sich als wünschenswert erwiesen, keine vollständig konvergenzfreie und/oder akkommodationsfreie Augenstellung zu erreichen, da diese an sich theoretische Idealstellung von den Augen als unnatürliche Stellung und damit als Zwang empfunden wird. Stattdessen ist es vorteilhaft, in bestimmtem Ausmaß eine gewisse Restkonvergenz und/oder Restakkommodation bei der Brillenkonstruktion vorzusehen, wobei das Ausmaß der gewählten Abweichung von der Idealstellung in Abhängigkeit von den persönlichen Bedingungen jedes Brillenbenutzers, von der Arbeitsentfernung zwischen Auge und Bildebene, dem jeweiligen Abstand zwischen den Augen, d.h. der Pupillendistanz, usw. definiert werden kann.

Demgemäß wird im folgenden auch der Einfachheit halber nicht von Konvergenzfreiheit und/oder Akkommodationsfreiheit gesprochen, sondern von Konvergenzkompensation und/oder Akkommodationskompensation.

Erfindungsgemäß besteht die zum Zweck der Konvergenzkompensation vorgesehene optische Lösung bei der Brille gemäß der Erfindung darin., daß die optischen Gläser Prismen mit ebenen Oberflächen aufweisen, wobei die augabgewandten Prismenoberflächen in spezieller Weise voneinander abgeneigt sind. Diese Neigung ist derart gestaltet, daß mit Hilfe der Prismen die parallelen Blickrichtungen des Auges in Richtung zur Bildebene konvergiert, d.h. also so abgeändert werden, daß sie sich in der Bildebene schneiden. Dadurch wird die Konvergenz künstlich erzeugt, so daß es für das Auge nicht mehr erforderlich ist, durch entsprechende Einstellung der Augenachse diese Konvergenz selbst vorzusehen.

Zum Zweck der Akkommodationskompensation weisen bei der erfindungsgemäß ausgestalteten Brille die optischen Gläser jeweils eine Linse auf. Diese kann bikonvex oder plankonvex ausgestaltet sein. Vorzugsweise soll die Brennweite der Linse dem Abstand zwischen Bildebene und Linse entsprechen, so daß die von der Bildebene kommenden Lichtstrahlen auf der augseitigen Oberfläche der Linse als angenähert parallele Lichtstrahlen austreten. Dies bedeutet, daß dann, wenn der zu betrachtende Gegenstand, d.h. die Bildebene in die Brennebene der Linse gebracht wird, eine sehr große bis unendliche Bildweite entsteht. Hierdurch wird der Blick, d.h. die Linse des Auges, ebenfalls auf eine entsprechend große Entfernung eingestellt, was eine vollkommen entspannte Stellung der Augenlinse zur Folge hat.

Besondere Vorteile werden mit der Erfindung dann erzielt, wenn die erfindungsgemäße Brille derart ausgestaltet ist, daß sich eine Kombination von Konvergenzkompensation und Akkommodationskompensation ergibt. Zu diesem Zweck ist den Linsen auf der augabgekehrten Seite jeweils ein Prisma vorgeordnet, so daß die von der Bildebene kommenden Lichtstrahlen nach dem Hindurchtreten durch die Prismen-Linsen-Kombination sowohl konvergenzkompensiert als auch akkommodationskompensiert auf die Augenlinse auftreffen. Dies bedeutet, daß der Bildschirm bzw. das hierauf oder auf einer anderen Bildebene abgebildete Bild scharf gesehen wird, daß jedoch das Auge bzw. die Augenlinse auf sehr große Entfernung eingestellt ist und somit vollständig frei von Ermüdungs- bzw. Überanstrengungserscheinungen bleibt. Insgesamt betrachten daher die Augen den Bildschirm sowohl akkommodations- als auch konvergenzkompensiert.

Erfindungsgemäß ist es schließlich auch möglich, mittels der Brille auf dem Bildschirm eine räumliche Darstellung ohne auftretende Vertikalparallaxen zu erzielen. Dies wird bei der Brille gemäß der Erfindung dadurch erreicht, daß zum räumlichen Sehen des auf einem Bildschirm, insbesondere einem Farbbildschirm erzeugten Bildes Prismen mit großem Dispersionsvermögen vorgesehen sind, und zwar derart, daß jede auf dem Farbbildschirm erzeugte Farbe eines Bildes entsprechend ihrer Wellenlänge unterschiedlich stark in den Prismen gebrochen und damit an horizontal unterschiedlichen Stellen an der Netzhaut des Auges abgebildet wird. Die dadurch bewirkte Quer- bzw. Horizontaldisparation erzeugt einen räumlichen Eindruck. So wird z. B. die rote Farbe ganz vorn und die blaue Farbe ganz hinten gesehen. Hierbei wird zukünftig bei der Schaffung entsprechender Bilderzeugungsprogramme lediglich zu berücksichtigen sein, daß jeder Farbe eine entsprechende Tiefe entspricht.

In jedem Fall wird mit einer derart ausgestalteten Brille gemäß der Erfindung eine beträchtliche Tiefenwirkung erzeugt, die bis zu 100 mm und mehr reichen kann.

Die erfindungsgemäße Brille läßt sich mit Vorteil nicht nur zum Betrachten der Bildebene eines Bildschirms (Computerbildschirm, Monitor, Fernseher, Mikrofilmlesegerät usw.) einsetzen, sondern zum Betrachten anderer Bildebenen, die vollständig oder weitgehend eben sind, beispielsweise Projektionswand, Glasschirm, Buch usw.

Die Erfindung wird im folgenden anhand der Zeichnung näher erläutert. Diese zeigt in:

Fig. 1 schematisch eine Brille zur Konvergenzkompensation des auf einem Bildschirm erzeugten Bildes;

Fig. 2 schematisch eine Brille zur Akkommodationskompensation des auf einem Bildschirm erzeugten Bildes und

Fig. 3 schematisch eine Brille zur kombinierten Konvergenz- und Akkommodationskompensation.

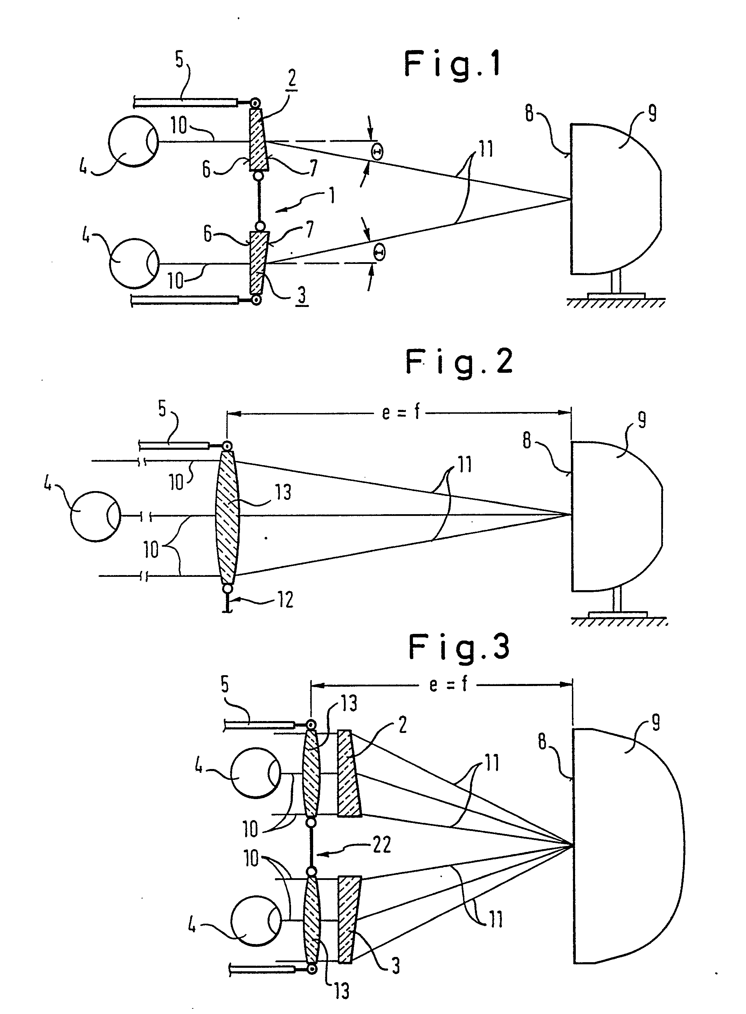

Bei der aus Fig. 1 ersichtlichen, zur Konvergenzkompensation dienenden Brille 1 sind als optische Gläser zwei Prismen 2, 3 vorgesehen. Diese sind in einem dem Abstand der Augen 4 entsprechenden Abstand angeordnet und mittels eines üblichen Traggestells 5 starr miteinander verbunden.

Die beiden Prismen 2, 3 weisen jeweils ebene Prismenoberflächen 6, 7 auf, wobei die den Augen 4 zugewandten Oberflächen 6 beim dargestellten Ausführungsbeispiel parallel zur Bildebene 8 eines Bildschirms 9 verlaufen, aber auch in jeder anderen geeigneten Neigung verlaufen können. Demgegenüber sind die den Augen 4 abgewandten Prismenoberflächen 7 geneigt verlaufend angeordnet, und zwar voneinander weggeneigt. Hierbei ist die Neigung in der deutlich aus Fig. 1 ersichtlichen Weise derart gewählt, daß die durch den Strahlengang 10 verdeutlichte parallele Blickrichtung der Augen 4 durch die Prismen 2, 3 geändert wird, und zwar so, daß die Lichtstrahlen 11 auf der augabgewandten Seite der Prismen 2, 3 die erforderliche Konvergenz aufweisen und sich in der Bildebene 8 des Bildschirms 9 schneiden. Hierbei wird der Neigungswinkel θ, den die Lichtstrahlen 11 gegenüber der Horizontalen aufweisen, durch die Prismen 2, 3 künstlich erzeugt.

Demgegenüber ist bei dem Ausführungsbeispiel der Brille 12 gemäß Fig. 2 eine Akkommodationskompensation vorgesehen. Zu diesem Zweck sind als optische Gläser für das Traggestell 5 der Brille 12 Linsen 13 vorgesehen, die als bikonvexe oder plankonvexe Linsen ausgebildet sein können und deren Brennweite f derart gehalten ist, daß diese der Betrachtungsentfernung e, d.h. dem Abstand zwischen der Bildebene 8 des Bildschirms 9 und der Linse 13 entspricht. Dies bedeutet mit anderen Worten, daß dann, wenn der zu betrachtende Gegenstand in der Bildebene 8 des Bildschirms 9 in die im Abstand f (Brennweite) zur Linse 13 befindliche Brennebene der Linse 13 gebracht wird, eine sehr große bis unendliche Bildweite entsteht, so daß dann die Augen 4, wie aus dem parallelen Strahlengang 10 ersichtlich, ebenfalls in unendliche Entfernung blicken und somit vollständig ermüdungsfrei sind.

Nach dem Abbildungsgesetz der geometrischen Optik gilt:

$$\frac{1}{b} + \frac{1}{g} = \frac{1}{f}$$

wobei

b = Bildweite,
g = Gegenstandsweite
f = Brennweite
e = Betrachtungsentfernung.

Setzt man g = f, so ergibt sich:

$$\frac{1}{b} + \frac{1}{f} = \frac{1}{f}$$

d.h.

$$\frac{1}{b} = 0$$

d.h.

b = ∞.

Dies bestätigt, daß für die beschriebene Ausbildung und Anordnung der Brille 12 die Augen 4 den in der Bildebene 8 zu betrachtenden Gegenstand in großer Entfernung erblicken und somit akkommodationskompensiert eingestellt sind.

Bei der Ausführungsform der Brille 22 gemäß Fig. 3 ist eine Kombination von Konvergenz- und Akkommodationskompensation vorgesehen. Zu diesem Zweck ist den Linsen 13, wie ersichtlich, auf der augabgekehrten Seite jeweils ein Prisma 2, 3 vorgeordnet, so daß sich insgesamt bei der Brille 22 der kombinierte Effekt aus den Ausführungsformen gemäß Fig. 1 und 2 ergibt. Dies bedeutet, daß die von der Bildebene 8 kommenden Lichtstrahlen 11 nach dem Hindurchtreten durch die Prismen-Linsen-Kombination 2, 3, 13 sowohl konvergenzkompensiert als auch akkommodationskompensiert in einem angenähert parallelen Strahlengang 10 auf die Augen 4 bzw. auf deren Linsen auftreffen. Hierdurch wird in der erwünschten Weise das in der Bildebene 8 des Bildschirms 9 abgebildete Bild scharf gesehen, wobei aber gleichzeitig die Augen 4 auf sehr große Entfernung eingestellt sind. Hierdurch betrachten die Augen 4 den Bildschirm 9 sowohl akkommodations- als auch konvergenzkompensiert, d.h. mit dem erwünschten Ausmaß an verbliebener Restkonvergenz und Restakkommodation.

Bei dieser Ausführungsform ergibt sich gleichzeitig, wie ebenfalls schon erläutert, der wesentliche Vorteil, daß insbesondere dann, wenn der Bildschirm 9 ein Farbbildschirm ist, jede auf diesem Farbbildschirm erzeugte Farbe entsprechend ihrer Wellenlänge in den Prismen 2, 3 unterschiedlich stark gebrochen und auch damit auf der Netzhaut der Augen 4 an horizontal unterschiedlichen Stellen abgebildet wird. Dies erzeugt eine Tiefenwirkung von beträchtlichem Ausmaß, wobei die erzielte Tiefenwirkung Δ z näherungsweise mit folgender Formel beschrieben werden kann:

Δ z ≈ e · Δ, wobei

$$\Delta = \frac{n_F - n_C}{n_D - 1}.$$

hierbei bedeuten:

Δ = Dispersionsvermögen der Prismen 2, 3,
n = Brechungsindex,
F, C, D = Fraunhofer'sche Linien,
e = Betrachtungsentfernung.

Obwohl zeichnerisch nicht näher dargestellt, ist es zur weiteren Erhöhung der Farbdisparation möglich, jeweils mehrere Prismen 2,3 aus unterschiedlichen Materialien und/oder aus unterschiedlichen Glassorten miteinander zu kombinieren.

Schließlich ist es auch möglich bzw. sogar wünschenswert, die jedem einzelnen Auge 4 zugeordnete Prismen-Linsen-Kombination 2, 13 bzw. 3, 13 entweder einstückig zu fertigen oder aber durch Kittung, Verklebung usw. fest miteinander zu verbinden.

Hinsichtlich vorstehend nicht beschriebener Merkmale der Erfindung wird im übrigen ausdrücklich auf die Zeichnung sowie auf die Patentansprüche verwiesen.

## Ansprüche

1. Brille zum ermüdungsfreien Betrachten der Bildebene eines Bildschirms oder anderer Bildebenen,
dadurch **gekennzeichnet,**

daß sie zwei im Augabstand voneinander angeordnete, durch ein Traggestell (5) gehaltene und starr miteinander verbundene optische Gläser (2,3; 13) aufweist, die jeweils so ausgebildet sind, daß die von der Bildebene (8) eines Bildschirms (9) oder einer anderen Bildebene kommenden divergenten Lichtstrahlen (11) auf der augseitigen Glasoberfläche als angenähert parallele Lichtstrahlen (10) austreten und damit angenähert konvergenzfrei, d.h. im erwünschten Ausmaß konvergenzkompensiert, ins Auge (4) fallen und daß die Entfernung der Bildebene (8) zum Auge (4) bzw. zum optischen Glas der angenähert akkommodationsfreien Ferneinstellung des Auges (4) entspricht.

2. Brille nach Anspruch 1,
dadurch **gekennzeichnet,**
daß die optischen Gläser zur Konvergenzkompensation der Sehstrahlen Prismen (2,3) mit ebenen Oberflächen (6, 7) aufweisen, wobei die augabgewandten Prismenoberflächen (7) voneinander abgeneigt sind, derart, daß die parallelen Blickrichtungen (10) der Augen (4) in Richtung zur Bildebene (8) konvergiert werden und sich in der Bildebene (8) schneiden (Fig. 1).

3. Brille nach Anspruch 1 oder 2,
dadurch **gekennzeichnet,**
daß die optischen Gläser zur Akkommodationskompensation jeweils eine bikonvexe oder plankovexe Linse (13) aufweisen, deren Brennweite (f) dem Abstand (e) zwischen Bildebene (8) und Linse (13) entspricht, so daß die von der Bildebene (8) kommenden Lichtstrahlen (11) auf der augseitigen Oberfläche der Linse (13) als angenähert parallele Lichtstrahlen (10) austreten (Fig. 2).

4. Brille nach Anspruch 3,
dadurch **gekennzeichnet,**
daß den Linsen (13) auf der augabgekehrten Seite jeweils ein Prisma (2,3) vorgeordnet ist, so daß die von der Bildebene (8) kommenden Lichtstrahlen (11) nach dem Hindurchtreten durch die Prismen-Linsen-Kombination (2,3;13) sowohl konvergenzkompensiert als auch akkommodationskompensiert auf die Augenlinse auftreffen (Fig. 3).

5. Brille nach Anspruch 4,
dadurch **gekennzeichnet,**
daß das Prisma (2,3) und die Linse (13) aus einem Stück gefertigt oder durch Kittung, Verklebung usw. fest miteinander verbunden sind.

6. Brille nach einem der Ansprüche 1 bis 5,
dadurch **gekennzeichnet,**
daß zum räumlichen Sehen des auf einer Farbbildebene (8) erzeugten Bildes Prismen (2,3) mit großem Dispersionsvermögen vorgesehen sind, derart, daß jede auf der Bildebene (8) erzeugte Farbe eines Bildes entsprechend ihrer Wellenlänge unterschiedlich stark in den Prismen (2,3) gebrochen und damit an horizontal unterschiedlichen Stellen auf der Netzhaut des Auges (4) abgebildet wird.

7. Brille nach Anspruch 6,
dadurch **gekennzeichnet,**
daß zur Erhöhung der Farbdisparation mehrere Prismen (2,3) aus unterschiedlichen Materialien und/oder aus unterschiedlichen Glassorten kombiniert sind.

# Fig.1

# Fig.2

# Fig.3